Europäisches Patentamt

(19) European Patent Office

Office européen des brevets

(11) Publication number: **0 229 920 B1**

(12) # EUROPEAN PATENT SPECIFICATION

(45) Date of publication of patent specification: 03.07.91 (51) Int. Cl.⁵: **A23F 5/12**

(21) Application number: 86116063.8

(22) Date of filing: 20.11.86

(54) Coffee tablets.

(30) Priority: 09.01.86 US 817516

(43) Date of publication of application:
29.07.87 Bulletin 87/31

(45) Publication of the grant of the patent:
03.07.91 Bulletin 91/27

(84) Designated Contracting States:
AT BE CH DE ES FR GB IT LI LU NL SE

(56) References cited:
AT-A- 197 187          FR-A- 912 834
FR-A- 1 258 527        FR-A- 2 197 523
GB-A- 376 588          GB-A- 413 488
LU-A- 66 016           US-A- 3 607 299
US-A- 3 770 457

(73) Proprietor: SOCIETE DES PRODUITS NESTLE
S.A.
Case postale 353
CH-1800 Vevey(CH)

(72) Inventor: Belville, Leonard E.
2402 Hyatts Road
Delaware Ohio 43015(US)
Inventor: Liu, Richard Tien-Szu
6855 Downs Street
Worthington Ohio 43085(US)
Inventor: Reese, Robert E.
15195 Scottslawn Road
Marysville Ohio 43040(US)

## Description

The present invention relates to roast and ground coffee compressed into tablets.

Although it has been proposed to provide coffee tablets containing premeasured amounts of coffee so that the consumer need not measure the bulk product, roast and ground coffee typically is distributed to the consumer packed in metal cans impervious to the atmosphere. When provided in premeasured amounts, roast and ground coffee similarly must be provided in atmosphere-impervious containers, such as metallized plastic pouches.

Compression of roast and ground coffee particles to form a tablet may squeeze coffee oils from the particles and result in chemical instability during storage. Canadian Patent 808,588 states that a satisfactory tablet may be formed by compressing freshly roasted coffee in a "critical time-pressure range." The "critical" pressure to compact the roast and ground coffee particles is between 8,000 to 13,000 p.s.i.g., which equates to 55.2 to 89.6 MPa. The pressure is applied for a period of time sufficient to hold the particles together in the shape of a tablet but insufficient to cause an extrusion or expression of coffee oil or wax from the coffee. The required compression times set forth in the patent are on the order of 0.2 to 0.5 seconds, for one embodiment, and up to 1 to 2 seconds for another embodiment. The patent indicates that compression, at the indicated pressures, releases gases normally entrapped in roast and ground coffee particles, so that the tablet will not release gases during storage, thereby enabling utilization of containers which need not be resistant to deformation due to internal pressure development during storage.

U.S. Patent 3,511,666 proposes to form a coffee tablet, to be encased in a filter bag or percolator package. The tablets are formed by compression utilizing the same lower "critical" pressure limit as the earlier, above-noted, commonly owned Canadian patent. However, the '666 patent states that it is also "critical" that the roast and ground coffee particles be degassed prior to the tabletting operation to avoid fissures in the coffee pellet. The patent states that the actual pressure used may vary within the stated critical range, depending on the temperature and moisture of the coffee, the blend, rate of pelletizing, and amount of degassing. The percolator package is an integral part of the invention as the tablets allow a larger pore size in the filter package than used for roast and ground coffee. Thus, the porosity of the filter bag is such that it will not release dust prior to percolation but have sufficient porosity for efficient extraction without experiencing loss of grounds.

The techniques set forth in the aforementioned patents thus require close control of both time and pressure in the compacting step. Further, as the pressure utilized to form the tablets according to such techniques is high, the density of the tablets is high and the tablets may not disintegrate properly during brewing, leading to incomplete extraction of coffee constituents and hence an undesirably weak brew. As illustrated by the examples of the '666 patent, such highly compacted, dense tablets make inefficient use of the coffee by requiring larger amounts to make an acceptable brew. Accordingly, there has been need for an improvement to provide pre-measured convenience roast and ground coffee and improved coffee tablets, which the present invention addresses to provide significant savings in the costs of packaging, distribution and storage.

The present invention incorporates the discovery that roast and ground coffee particles having a moisture content of at least 3% by weight can be formed into satisfactory coherent tablets by compaction, without extraneous binders, using pressures considerably less than those previously regarded as necessary.

As is known in the art, as the moisture content of roast and ground coffee approaches 10% by weight, chemical reactions will occur which will affect the stability of the roast and ground coffee and deteriorate the same. Roast and ground coffee particles having a moisture content of from 3 to 6% by weight have quite acceptable stability, and are preferred to be utilized in the present invention. Generally, roast and ground coffee having moisture levels exceeding 10% by weight will not be utilized. As the moisture level rises above 6%, acceptable tablets are produced, but there is a tendency for fissures to develop in the tablets and thus weaken the tablets.

Typically, utilizing conventional procedures, roast and ground coffee emerges from the roaster having a moisture content of less than 3% by weight. At moisture levels below 3% by weight the tablet tends to lack the necessary strength to remain intact, and breakage will result. In accordance with the present invention, when the moisture level of the roast and ground coffee is below 3%, the moisture content is adjusted to the desired level.

In a variant of the process, the roast and ground coffee tablets may be coated with a continuous layer of substantially aroma-free, oil-free soluble coffee solids, other edible carbohydrates, or antioxidants to prevent deterioration by providing protection against oxidation, and/or other materials, such as skimmed milk solids.

Flavorants or other product enhancers may also be incorporated in the tablets.

The uncoated tablets of the present invention may be packaged individually under a subatmospheric total pressure within the package to prevent deterioration. In the case of coated tablets, the coating allows packaging which need not preclude the atmosphere from the product.

The compacting operation may be performed by placing a mass of coffee particles between opposed members and urging the members towards one another. Compacting pressures specified in this disclosure refer to the maximum pressure exerted on the mass of coffee particles during the compacting step. Typically, the opposed members include a die, defining a tubular pocket of the desired shape open at one end, and a punch slidably received in the pocket. With that arrangement, the compacting pressure is equal to the maximum force applied to the punch in its direction of movement divided by the projected area of the punch normal to its direction of movement. A conventional press of a type which permits control of the forces applied to the opposed members may be employed; hydraulic presses are particularly suitable in this regard.

Coffee tablets according to the present invention are used in place of conventional particulate roast and ground coffee in conventional brewing processes. The coffee tablet is placed in a filter in a basket or filter compartment of a conventional coffee brewing device and extracted with hot water. The coffee tablets tend to disintegrate promptly upon exposure to hot water and thus provide effective extraction during brewing. Alternatively, the coffee tablet may be over-wrapped with filter paper or other appropriate filtering material, and be placed directly in the basket or filter compartment for brewing.

The coffee tablet readily disintegrates upon contact with hot water, and the coffee tablet need not conform closely to the dimensions of the basket or filter chamber to assure effective extraction. Thus, the sizes of the tablets may vary and accommodate various types of coffee brewing devices used by consumers. As illustrated in Example 4, a tablet smaller in diameter than the basket in which it is placed for brewing gives quite satisfactory results.

The yield or amount of coffee solids extracted by a given brewing procedure from a given charge of roast and ground coffee, tabletted according to the present invention typically is greater than the yield for an identical charge of untabletted coffee brewed by the same procedure. The difference in yield is most pronounced with coffee having a mean particle size of 1 mm. As the mean particle size is reduced below 1 mm, the yield for the tabletted material remains substantially constant, whereas the yield for the uncompacted particles increases markedly. At a mean particle size of 0.4 mm, yields are approximately equivalent for compacted and uncompacted coffee.

For maximum resistance to breakage during shipment and handling, the tablets should be formed in compact shapes without sharp corners and without protrusions. Thus, shapes such as rectangular solids with rounded corners, ovoids, spheres and the like may be employed. Annular and cylindrical shapes are particularly preferred, as such shapes provide good breakage resistance and conform to the shapes of basket or filter compartments in typical coffee brewing devices.

In a process according to the present invention, a mass of roast and ground coffee particles having a moisture content of at least about 3% by weight, and preferably from 3 to 6% by weight, is compacted under a pressure of from 20.7 MPa to 48.3 MPa to form a coherent tablet.

Roast and ground coffee particles having a mean particle size between 0.4 mm and 2.0 mm are employed in the process. Particles having a mean size between 0.4 mm and 1.5 mm are preferred, and particles having a mean size between 0.6 mm and 1.2 mm are particularly preferred.

Tablet formation under the conditions employed in the present invention is substantially independent of compacting time, and relatively low pressures may be utilized by reason of the controlled addition of moisture and the utilization of coffee particles ground to a particle size within a relatively narrow range. The compacting operation according to the present invention, using a particular pressure within the aforementioned range of from 20.7 MPa to 48.3 MPa, can be successfully repeated in mass production with coffee of the same blend, roast, particle size and moisture content, despite variations in compacting time. In selecting a specific compacting pressure to be employed, the pressure should be great enough to form the tablet, but not so great that a visible layer of free oil is formed which persists for more than 30 seconds on the surface of the tablet after release of the pressure.

For optimum flavor stability during storage, the moisture content of the tablet should not exceed about 6% by weight when packaged. Utilizing coffee particles having between 3% to 6% moisture by weight in the compacting step allows packaging without drying after compacting to achieve this moisture content. For typical roast and ground coffee, within the preferred moisture content range of 3% to 6% by weight, and having a mean particle size of 0.6 mm to 1.2 mm, compacting pressures from 27.6 MPa to 41.4 MPa provide a tablet of good mechanical strength without formation of a persistent oil layer. Such pressures are accordingly preferred. A moisture content of 4% for the roast and ground coffee to be compacted and a compacting pressure of 39.5 MPa are especially preferred.

The ratio of the volume of roast and ground coffee, to be compacted, to the volume of the compressed tablets can range from slightly less than a ratio of 2:1 by volume to a ratio of approximately 3:1, by volume. Typically, in accordance with the present invention the volume of the compressed tablets is between 37% and 44%, and preferably 40%, of the volume occupied by the roast and ground coffee before compaction. Although volume compaction is a function of pressure, the extent of volume compaction is also dependent upon such factors as the particular roast, blend and/or grind of the roast and ground coffee, and it has been found that satisfactory tablets can be made, as influenced by these factors, wherein the volume of the tablet is as great as 55% of the original volume of the roast and ground coffee to be compacted and wherein the volume of the tablet is as small as 30% of the volume of the roast and ground coffee to be compacted.

The density of the tablets is between 0.60 and 0.95 g/cm$^3$. Preferably the density is 0.70 to 0.85 g/cm$^3$, and more preferably 0.80 g/cm$^3$.

The coffee may be roasted by conventional techniques, and typically is ground to the desired particle size after roasting. Since the moisture content of the coffee emerging from a roaster is usually less than 3%, the moisture content typically needs to be adjusted to the desired value by exposing the roasted coffee, before and/or after grinding, to a humid gas or, preferably, to a fine mist or spray of water. Some or all of the water may be sprayed on the coffee immediately after roasting, so that the water added in the moisture adjustment step also cools or "quenches" the coffee.

In a variant of the process, coffee extract may be employed instead of water in the moisture adjustment step. The solids concentration of the extract may vary and may contain up to 35 percent solids, although substantially lower solids concentrations, in the range of from 6 to 18% solids are preferred. The coffee constituents added, via the extract, typically amount to less than about 5% by weight of the mass employed in the compacting operation, and so, even though the concentration of the extract that may be employed can approach 35%, the minor amounts of added coffee constituents, added via the coffee extract, do not appreciably affect the properties of the tablet obtained from the compacting step and do not act as a binder.

Preferably, the only operative steps between the roasting and packaging steps are grinding, moisture adjustment, compacting and, optionally, coating. To minimize flavor loss the coffee should be advanced through the steps subsequent to roasting as rapidly as is practicable, as any flavor loss substantially ceases upon packaging. When a coating step is used, flavor loss substantially ceases upon coating. The tablets desirably are packaged within two hours after the end of the roasting step. Preferably, the time between compaction and packaging is less than 30 minutes.

In practising the optional coating step, tablets are provided with a coating of a water-dispersible, edible solid material on the exterior of the tablet to protect the roast and ground coffee in the tablet from atmospheric oxygen before packaging and after the package containing the tablet is opened by the consumer. The coating typically includes 0.0016 to 0.032 gm of solids per cm$^2$ of tablet surface area. For tablets of typical size, the coating amounts to 0.5 to 10 parts by weight solids per 100 parts by weight roast and ground coffee in the tablet.

The coating material should be a substance which does not adversely affect the flavor of the beverage. As the coating itself is exposed to atmospheric oxygen, the coating should be substantially devoid of substances which develop undesirable flavors upon exposure to the atmosphere. Suitable coating materials comprise carbohydrates, including maltodextrin, modified starch, corn syrup solids, gum and the like, skimmed milk solids, and/or antioxidants, which disperse promptly upon contact with hot water. Coating materials, such as skimmed milk solids, typically will be incorporated in the tablet to enhance the product and/or appeal to consumer preferences.

The preferred coating material is soluble coffee solids. When utilizing soluble coffee solids for coating, volatile coffee flavor and aroma constituents commonly referred to as "aromatics" desirably should be removed from the soluble coffee solids. The aromatics may be removed by well known methods.

A continuous coating or layer of a water-dispersible, edible material may be formed on the surface of a coffee tablet by forming an aqueous liquid dispersion of the material, preferably containing from about 30% to about 50% solids, by weight. The aqueous dispersion may be made by mixing dry solids with water or, in the case of soluble coffee solids, by concentrating a coffee extract to the desired solids content.

The dispersion may be applied onto the tablet by spraying, for example. Then the solids content of the dispersion is adjusted to about 94% or more so that the coating contains about 6% moisture or less. Adjustment of the dispersion to the high solids content and low moisture level of the final coating is desirably performed rapidly, preferably within about 5 minutes and more preferably within about ½ minute, to limit diffusion of moisture from the dispersion to the interior of the tablet.

The solids content of the dispersion may be adjusted either by removing water from the dispersion, as by drying the dispersion-covered tablet in air, or, preferably, by adding solids to the dispersion, as by

EP 0 229 920 B1

applying dry solids to the dispersion-covered tablet. Thus, dispersion-covered tablets may be rolled gently in a chamber containing fluidized finely powdered dry solids.

In a variant of the coating technique, the tablets are moistened with an aqueous liquid, and the dry solids are applied to the moistened tablets to form a liquid dispersion of coffee solids on the tablet surface. Application of dry solids to the dispersion as described above provides adjustment of the solids and moisture contents of the dispersion. Continued application of solids or drying in air may be employed to adjust the solids content of the dispersion to the solids content desired in the final coating.

Flavorants can be included in the coating material, if desired. The flavorants desirably also should be substantially resistant to loss or degradation upon exposure of the tablet to the atmosphere. Other product enhancers such as common sugar or an artificial sweetener may be included in the coating to enhance the final beverage.

Contrary to the statements in the aforementioned prior art patents that pressures higher than those utilized in the present invention, or additional steps or prolonged dwell periods after roasting are needed for effective degassing, it has surprisingly been found that compaction according to the present invention effectively degasses the roast and ground coffee. The degassing achieved by the compacting step substantially alleviates gas evolution from the roast and ground coffee during the coating process, and hence enables formation of a substantially continuous and uniform coating. Accordingly, the coating will not be subsequently ruptured by evolved gases, and there will be no appreciable gas evolution from a tablet, particularly from an uncoated tablet, during storage to enable packaging uncoated tablets in sealed, flexible packages, which need not be resistant to pressures ordinarily developed by roast and ground coffee during storage.

The package, particularly for uncoated tablets, may be an envelope having a pair of opposed, flexible, sheet-like walls. Preferably, the exterior walls of the package include at least one flexible wall confronting each tablet in the package. The flexible walls may be formed from any conventional, gas-impermeable, sheet-like material suitable for use in contact with coffee, such as a multi-layer film including a thin metallic layer on a polymeric substrate such as a polyester.

The total gas pressure within the package is less than atmospheric pressure. Atmospheric pressure surrounding the package forces the flexible wall inwardly so that the flexible wall bears upon each tablet. Each tablet is thus retained against movement within the package and thus protected from physical damage during shipment. The substantial absence of gas evolution from the tablets during storage and distribution aids in maintenance of the subatmospheric total pressure within the package, and thus aids in maintenance of effective engagement between the tablets and the flexible wall of the package.

The package may be evacuated and sealed by conventional packaging apparatus. The sealed package thus protects each tablet from the atmosphere until it is used to minimize the partial pressure of oxygen within the package, the interior of the package may be flushed with an inert gas such as carbon dioxide before the package is evacuated.

As with uncoated tablets, flavor-protecting coated tablets also may be packaged in individual sealed packages, one tablet per package, to provide superior retention. As the coating inhibits deterioration, however, the coated tablets may be packaged in unitary sealed packages which contain a plurality of tablets. The coated tablets of the present invention, however, are additionally advantageous, as they may be packaged and distributed under substantially atmospheric conditions in unsealed or gas-permeable containers, including ordinary cardboard cartons. Thus, since the coating protects the coffee from the atmosphere during storage, distribution and use, substantial savings in packaging costs can be realized. The protection afforded by the coating, and by the close packing of the roast and ground coffee in each tablet, provides acceptable flavor retention for a period significantly greater than that achieved with loose roast and ground coffee packaged in bulk, unprotected from the atmosphere.

The examples set forth below are illustratative of certain features of the present invention. Unless otherwise indicated, the percentages set forth are percentages by weight.

EXAMPLE 1

Coffee beans are blended and roasted according to conventional commercial techniques, quenched with water and then ground to a mean particle size of 1.0 mm. The ground coffee is placed in a rotating pan and additional water is sprayed onto the coffee until it reaches 4% moisture. A 60 gram portion of the moistened coffee is placed into a 100 mm diameter cylindrical pocket in a die. A cylindrical piston closely fitting the pocket is placed in the die, and the assembly is squeezed in a hydraulic press to develop 39.5 MPa pressure on the coffee, thus compacting the coffee to form a cylindrical tablet about 9.2 mm thick with flat end faces.

5

Tablets formed in this manner are packed in envelopes of metallized polyester film, one tablet per envelope, each envelope being flushed with carbon dioxide, evacuated to a total pressure of 8kPa (60 mm Hg) then sealed. The sealed envelopes are packed in cartons.

In accelerated aging tests at elevated temperature, the packaged tablets exhibit good flavor stability. The packaged tablets remain undamaged after vibration testing simulating severe conditions in truck transport.

A single tablet provides 8-10 cups of brewed coffee.

EXAMPLE 2

Dearomatized coffee extract is concentrated to 40% solids by evaporation, and a portion of the concentrated extract is spray-dried in a conventional manner to form a coffee solids powder which is pulverized to a mean particle size of 0.02 mm.

Coffee tablets made in accordance with Example 1 are moistened, immediately after compaction, with the concentrated extract by spraying the extract on each tablet so that 10 grams of extract are distributed over the entire exterior of each tablet. Immediately after the extract is applied, each tablet is exposed to a fluidized bed of the pulverized powder and gently rolled so that the powder impinges on all surfaces on the tablet. The powder adheres to the extract and fuses with the extract to form a coating comprising about 5 grams of coffee solids. The excess moisture is removed by the powder to form a coating of about 5% moisture.

The tablets are packaged as in Example 1, save that the envelopes used are larger. Each envelope contains a stack of 12 tablets in face-to-face orientation. Under the influence of atmospheric pressure, the walls of the envelope bear on the edges of the tablets and on the faces of the tablets at the ends of the stack.

EXAMPLE 3

Roast and ground coffee having a moisture content of 4% and a mean particle size of 1 mm is divided into five portions to make five separate tablets for comparison by compressing each portion at a different pressure level. The bed depth of each portion to be compressed is 23.5 mm. The thickness of each tablet made by the compression is measured three times, and the measurement determinations are averaged.

| Pressure MPa | Averaged Thickness mm | Tablet Volume as % of Original Mass | Other Observations |
|---|---|---|---|
| 17.2 | 11.7 | 49.8 | Broken Edges/ Lacks Strength |
| 28.5 | 10.3 | 43.8 | Edges Even/ Better Strength |
| 39.5 | 9.2 | 39.2 | Edges Good/Strong |
| 43.9 | 8.7 | 37.0 | Oil Showing/ Reabsorbed Back In Less Than 30 Seconds |
| 50.5 | 8.0 | 34.0 | More Oil/Darker Than Above/Glazed |

EXAMPLE 4

To demonstrate compatibility with various coffee makers, and convenience of differently-sized tablets and of similarly-sized tablets having differing weights, tablets are made from the same batch of roast and ground coffee in accordance with the process of the present invention. Two groups of 7.6cm (3 inch) diameter tablets are made. One group consists of twelve 7.6cm (3 inch) diameter tablets, each weighing 47 g. The second group of 7.6cm (3 inch) diameter tablets consists of twenty tablets, each weighing 24 g. Also twelve 10.2cm (4 inch) diameter coffee tablets, each weighing 47 g, are made. The twelve 10.2cm (4 inch) diameter tablets are then individually brewed in a four inch basket of a coffee maker. Of the twenty tablets weighing 24 grams, twelve are brewed individually in a 10.2cm (4 inch) basket, and four separate trials are made brewing two 24 g tablets together in a 10.2cm (4 inch) basket.

| No. of Trials | Tablet Dia. | Amount Coffee | (cc) Extraction Water | (%) Ave. Solids Content | (%) Ave. Yield |
|---|---|---|---|---|---|
| 12 | 3" | 47 g | 1400 | .941 | 25.11 |
| 12 | 4" | 47 g | 1400 | .932 | 24.86 |
| 12 | 3" | 24 g | 700 | .929 | 23.62 |
| 4 | 3" | 24 g x 2 | 1400 | .950 | 24.83 |

The results indicate that satisfactory cup strengths are achieved for all brews.

## Claims

1. A process for making coffee tablets comprising compacting, under a pressure from 20.7 MPa to 48.3 MPa, a mass of roast and ground coffee particles having a moisture content of at least 3% by weight and a mean particle size from 0.4 mm to 2.0 mm.

2. A process as claimed in claim 1, wherein the moisture content of roast and ground coffee particles is from 3% to 6% by weight.

3. A process as claimed in claim 2, wherein the roast and ground coffee particles have a mean particle size of 0.6 mm to 1.2 mm.

4. A process as claimed in claim 3, wherein the pressure is from 27.6 MPa to 41.4 MPa.

5. A process as claimed in any preceding claim wherein the mass of roast and ground coffee particles is compressed to 55% to 30% of the original volume of the mass.

6. A process as claimed in any of claims 1-5, further comprising coating the exterior of each tablet with a water-dispersible, edible material.

7. A process as claimed in claim 6, wherein the coating step includes forming a layer of a liquid dispersion of said, water-dispersible, edible material on each tablet and adjusting the solids content of said layer to at least about 94%.

8. A process as claimed in claim 6, wherein said coating step includes moistening the tablet with an aqueous liquid and applying dry solids.

9. A product of the process of any of claims 1-5 wherein the coffee tablet is enclosed in a sealed package in a substantially oxygen-free atmosphere at sub-atmospheric pressure, the package including at least one flexible wall confronting the tablet.

10. A product comprising a tablet of roast and ground coffee having a density between 0.60 and 0.95 gm/cm³ and a moisture content of between 3% and 6% by weight having a coating of a water-dispersible, edible material on the exterior of the tablet.

11. A product as claimed in claim 10, wherein the coating material is soluble coffee solids substantially devoid of aromatics.

12. A product as claimed in claim 10, enclosed in a package under atmospheric conditions.

13. A product as claimed in claim 10, wherein a plurality of tablets are enclosed in a flexible wall package in a substantially oxygen-free atmosphere at sub-atmospheric pressure.

**Revendications**

1. Procédé de production de comprimés de café, consistant à compacter, sous une pression de 20,7 MPa à 48,3 MPa, une masse de particules de café torréfié et moulu ayant une teneur en humidité d'au moins 3 % en poids et un diamètre moyen de particules de 0,4 mm à 2,0 mm.

2. Procédé suivant la revendication 1, dans lequel la teneur en humidité des particules de café torréfié et moulu est comprise dans l'intervalle de 3 % à 6 % en poids.

3. Procédé suivant la revendication 2, dans lequel les particules de café torréfié et moulu possèdent un diamètre moyen de particules de 0,6 mm à 1,2 mm.

4. Procédé suivant la revendication 3, dans lequel la pression est comprise dans l'intervalle de 27,6 MPa à 41,4 MPa.

5. Procédé suivant l'une quelconque des revendications précédentes, dans lequel la masse des particules de café torréfié et moulu est comprimée à un volume de 55 % à 30 % du volume initial de la masse.

6. Procédé suivant l'une quelconque des revendications 1 à 5, consistant en outre à revêtir l'extérieur de chaque comprimé avec une substance comestible, dispersable dans l'eau.

7. Procédé suivant la revendication 6, dans lequel l'étape de revêtement consiste à former une couche d'une dispersion dans un liquide de ladite substance comestible, dispersable dans l'eau, sur chaque comprimé et à ajuster la teneur en matières solides de ladite couche à au moins environ 94 %.

8. Procédé suivant la revendication 6, dans lequel l'étape de revêtement consiste à humidifier le comprimé avec un liquide aqueux et à appliquer une substance solide sèche.

9. Produit obtenu par mise en oeuvre du procédé suivant l'une quelconque des revendications 1 à 5, dans lequel le comprimé de café est emballé dans un conditionnement clos sous atmosphère pratiquement dépourvue d'oxygène à une pression inférieure à la pression atmosphérique, le conditionnement comprenant au moins une paroi flexible placée en contact avec le comprimé.

10. Produit comprenant un comprimé de café torréfié et moulu ayant une masse volumique de 0,60 à 0,95 g/cm³ et une teneur en humidité de 3 % à 6 % en poids, comprenant un revêtement d'une substance comestible, dispersable dans l'eau, sur l'extérieur du comprimé.

11. Produit suivant la revendication 10, dans lequel la substance de revêtement est constituée de la matière solide soluble dérivée du café, pratiquement dépourvue de composés aromatiques.

12. Produit suivant la revendication 10, emballé dans un conditionnement dans les conditions atmosphériques.

13. Produit suivant la revendication 10, dans lequel plusieurs comprimés sont emballés dans un conditionnement à paroi flexible sous une atmosphère pratiquement dépourvue d'oxygène à une pression inférieure à la pression atmosphérique.

**Ansprüche**

1. Verfahren zur Herstellung von Kaffeetabletten, welches das Verdichten, unter einem Druck von 20,7 bis 48,3 MPa, einer Masse von Teilchen aus geröstetem und gemahlenem Kaffee mit einem Feuchtigkeitsgehalt von wenigstens 3 Gew.-% und einer mittleren Teilchengröße von 0,4 mm bis 2,0 mm umfaßt.

2. Verfahren nach Anspruch 1, wobei der Feuchtigkeitsgehalt der Teilchen aus geröstetem und gemahlenem Kaffee 3 bis 6 Gew.-% beträgt.

3. Verfahren nach Anspruch 2, wobei die Teilchen aus geröstetem und gemahlenem Kaffee eine mittlere Teilchengröße von 0,6 mm bis 1,2 mm aufweisen.

4. Verfahren nach Anspruch 3, wobei ein Druck von 27,6 MPa bis 41,4 MPa angewendet wird.

5. Verfahren nach einem der Ansprüche 1 bis 4, wobei die Masse von Teilchen aus geröstetem und gemahlenem Kaffee auf 55% bis 30% des ursprünglichen Volumens der Masse komprimiert wird.

6. Verfahren nach einem der Ansprüche 1 bis 5, welches weiterhin das Überziehen der Außenseite jeder Tablette mit einem in Wasser dispergierbaren, genießbaren Material umfaßt.

7. Verfahren nach Anspruch 6, wobei die Stufe des Überziehens das Ausbilden einer Schicht einer flüssigen Dispersion des in Wasser dispergierbaren, genießbaren Materials auf jeder Tablette und das Einstellen des Feststoffgehaltes dieser Schicht auf wenigstens etwa 94 % umfaßt.

8. Verfahren nach Anspruch 6, wobei die Stufe des Überziehens das Anfeuchten der Tablette mit einer wäßrigen Flüssigkeit und das Aufbringen von trockenen Feststoffen umfaßt.

9. Produkt des Verfahrens nach einem der Ansprüche 1 bis 5, wobei die Kaffeetsblette in einer dicht verschlossenen Verpackung in einer im wesentlichen sauerstofffreien Atmosphäre und bei einem unter dem Atmosphärendruck liegenden Druck eingeschlossen ist, und wobei die Verpackung wenigstens eine biegsame, der Tablette gegenüberstehende Wand enthält.

10. Produkt, welches eine Tablette aus geröstetem und gemahlenem Kaffee mit einer Dichte zwischen 0,60 und 0,95 g/cm³ und einem Feuchtigkeitsgehalt zwischen 3 und 6 Gew.-% enthält, welche Tablette einen Überzug aus einem in Wasser dispergierbaren, genießbaren Material auf der Außenseite der Tablette aufweist.

11. Produkt nach Anspruch 10, wobei das Überzugsmaterial aus löslichen Kaffeefeststoffen besteht, die im wesentlichen von flüchtigen Kaffeegeschmacks- und -aromabestandteilen, den sogenannten "aromatics", frei sind.

12. Produkt nach Anspruch 10, welches unter den Bedingungen der Außen-atmosphäre in einer Verpackung eingeschlossen ist.

13. Produkt nach Anspruch 10, wobei eine Vielzahl von Tabletten in einer Verpackung mit einer biegsamen Wand, in einer im wesentlichen sauerstofffreien Atmosphäre, und bei einem unter dem Atmosphärendruck liegenden Druck eingeschlossen ist.